# EUROPEAN PATENT SPECIFICATION

(11) **EP 3 830 658 B1**
(45) Date of publication and mention of the grant of the patent: **23.04.2025**
(21) Application number: 19778858.1
(22) Date of filing: 17.09.2019
(51) Int. Cl.: G05B 19/4099

(54) **DATA STRUCTURE PRODUCT AND PRODUCT KIT**
DATENSTRUKTURPRODUKT UND PRODUKTKIT
PRODUIT DE STRUCTURE DE DONNÉES ET KIT DE PRODUITS

(30) Priority: 18.09.2018 EP 18195187
(43) Date of publication of application: 09.06.2021
(73) Proprietor: Siemens Energy Global GmbH & Co. KG, 81739 München (DE)
(72) Inventor: FORNANDER, Jerry, 61232 Finspang (SE); GRAICHEN, Andreas, 60211 Norrköping (SE); JETZFELLNER, Thomas, 85609 Aschheim (DE); LINDSTAM, Johan, 60371 Norrköping (SE); SAUER, Markus, 81739 München (DE); STURM, Monika, 1190 Wien (AT)
(86) International application number: PCT/EP2019/074760
(87) International publication number: WO 2020/058214

(56) References cited:
- EP-A1- 3 340 100
- WO-A1-2017/167399
- WO-A1-2018/119085
- US-A1- 2014 223 583
- US-A1- 2017 279 783
- US-A1- 2017 286 572
- US-A1- 2018 136 633
- US-A1- 2020 047 414
- GENERAL ELECTRIC: "GE Digital Twin: Analytic Engine for the Digital Power Plant", 1 January 2017 (2017-01-01), pages 1 - 29, XP055501710, Retrieved from the Internet <URL:https://www.ge.com/digital/sites/default/files/Digital-Twin-for-the-digital-power-plant-.pdf> [retrieved on 20180823]
- TAHAN MOHAMMADREZA ET AL: "Performance-based health monitoring, diagnostics and prognostics for condition-based maintenance of gas turbines: A review", APPLIED ENERGY, ELSEVIER SCIENCE PUBLISHERS, GB, vol. 198, 28 April 2017 (2017-04-28), pages 122 - 144, XP085022281, ISSN: 0306-2619, DOI: 10.1016/J.APENERGY.2017.04.048
- HOLLAND MARTIN ET AL: "Intellectual Property Protection of 3D Print Supply Chain with Blockchain Technology", 2018 IEEE INTERNATIONAL CONFERENCE ON ENGINEERING, TECHNOLOGY AND INNOVATION (ICE/ITMC), IEEE, 17 June 2018 (2018-06-17), pages 1 - 8, XP033386630, DOI: 10.1109/ICE.2018.8436315

## Description

The invention refers to a data structure product containing sensor data gathered during the additive manufacturing production process of a product, and adapting the service time for said product during its use by taking into account said stored sensor data.

Furthermore, the invention refers to a kit containing a product and said data structure product of said product.

The product is a heat shield, a blade or a vane used in a streaming engine.

Semiautomatic or automatic manufacturing devices are widely used in industrial manufacturing and are continuously the topic of further developments. New methods of manufacturing like additive manufacturing provide great opportunities, however, simultaneously provide new challenges to transfer such methods from research topics to reliable and universal applicable manufacturing devices.

WO 2018/119085 Al refers to additive manufacturing systems.

EP 3 340 100 Al refers to a method for validating additively manufactured components. US 2018/136633 A1 refers to a method for verifying and authenticating additive manufactured products utilizing extraterrestrial communication. WO 2017/167399 Al refers to a production system. HOLLAND MARTIN ET AL: "Intellectual Property Protection of 3D Print Supply Chain with Blockchain Technology", 2018 IEEE INTERNATIONAL CONFERENCE ON ENGINEERING, TECHNOLOGY AND INNOVATION (ICE/ITMC), IEEE, 17 June 2018 (2018-06-17), pages 1-8, refers to intellectual property protection of 3D Print Supply Chain with Blockchain Technology.

US 2017/279783 A1 refers to systems, methods, devices, and other techniques for using distributed ledgers, such as a blockchain database, to facilitate secure distribution and use of 3D model files to 3D printers over a computing network.

US 2014/223583 A1 refers to systems, methods, and program products for managing digital production from one or more production devices with one or more sources providing inputs of production designs and/or production options are disclosed.

Manufacturing methods like additive manufacturing provide the possibility to flexibly adapt the manufacturing to present needs and switch between different products with almost no or no time loss. However, small deviations of the manufacturing process can result in great differences of the characteristics of the final product or can even render the product unusable. Even minor differences can influence the lifetime of such product and, thus, would be highly interesting to be provided for Industry 4.0 providing highly reliable planning of, for example, service intervals. Currently, certain standards are established ensuring that a predefined quality is provided. However, corresponding tests of the manufactured products are time consuming and costly. Demanding a certain quality standard of the production increases the required effort and results in products being sorted out being fitting for the task, but not fulfilling some aspects of standards that might not even be required for at least certain applications.

Therefore, there is a need to make better use of the additive manufacturing, especially 3D-printing, to provide a more efficient use of its capacities.

These problems are solved by the device of appended independent claim 1. Further beneficial embodiments are disclosed in the appended dependent claims 2-5.

These benefits can be used to adapt the corresponding solution to specific needs or to solve further problems.

The invention is defined by the device of appended independent claim 1. Optional aspects of the invention are provided by the appended dependent claims 2-5.

The invention refers to a device for providing a computer program product, wherein the device stores the computer program product and provides the computer program product for further use, wherein the computer program product contains a data structure product referring to a product and a manufacturing process of the product, wherein the manufacturing process is an additive manufacturing process, wherein the data structure product contains manufacturing data of the manufacturing process of the specific product, wherein the data structure product contains monitored data acquired during the production of the product, wherein the monitored data contains sensor data acquired during the production of the product, wherein the data structure product is protected against manipulation, wherein the data structure product contains data regarding the maintenance of the product including the required service time, wherein the data structure product is adapted to monitor a later use of the product and adapt the service time according to the very specific use by taking into account the sensor data acquired during the production, wherein the product is a heat shield, a blade or a vane used in a streaming engine. Herein, such data structure product is no simple aggregation of data collected but interacts with, for example, the manufacturing device according to a key-keyhole principle. For example, it can contain smart contracts to automatically react to certain conditions. Also it can provide a data key fitting a corresponding smart contract requirement stored in, for example, the manufacturing device to trigger certain action.

According to an aspect the present invention refers to a kit containing a product and said device for providing a computer program product of the product.

To simplify understanding of the present invention it is referred to the detailed description hereafter and the figures attached as well as their description. However, the invention is not to be understood being limited to the embodiments as disclosed in the detailed description as they represent embodiments providing additional benefits to solve specific problems or fulfilling specific needs. Also, the figure is to be understood being not limiting the scope of the present invention, but disclosing a preferred embodiment explaining the invention further.

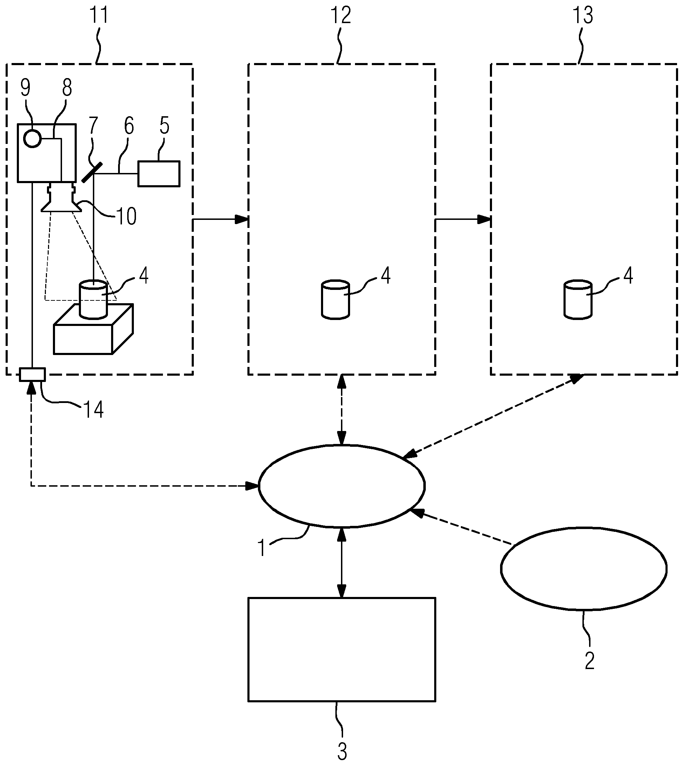

Fig. 1 shows a schematic drawing of an example of the inventive data structure product and its application.

The present invention refers to a data structure product referring to a product and a manufacturing process of the product, wherein the manufacturing process is an additive manufacturing process, wherein the data structure product contains manufacturing data of the manufacturing process of the specific product, wherein the data structure product is protected against manipulation.

According to further embodiments the manufacturing process preferably is a 3D-printing manufacturing process like selective laser melting, electron beam melting or binder jetting. It was found that manufacturing processes typically benefit greatly from such data structure product.

The data structure product contains monitored data acquired during the production of the product. It was noted that including such monitored data is especially helpful for, for example, 3D-printing manufacturing processes as it allows a later identification of possible deviations from standard characteristics of the finished product.

The term "monitored data" as used herein refers to data to be monitored during a process like a manufacturing process of a product. Herein, it not only refers to the sensor data explicitly included, but preferably also contains additional information of the corresponding device and/or process. For example, it can also include information regarding the temperature of the manufacturing environment, interruptions of the manufacturing process, unplanned openings of the manufacturing device, error messages, alarm messages, currents like the adjusted current applied to a laser included in the manufacturing device and comparable information.

Such monitored data is, for example, acquired during a manufacturing process of a product using additive manufacturing. Later on this data can be used to review the manufacturing process. For example, it can be checked whether all specifications were met during such manufacturing process. It was noted that such review is especially beneficial for sensor data acquired during such process. It is to be expected that such task becomes more and more important according to a more distributed production of corresponding products. In this context, it should be a very important topic for future production methods like additive manufacturing relying on a multitude of multipurpose devices automatically creating products at different sites. Although, the product should be expected to be the same it was noted that minor differences of the devices and specific parameters that might be included in the corresponding manufacturing process may result in grave differences of the product even possibly rendering it defective. Thus, such topic should become of high relevance of such application despite corresponding costs and additional work associated with it.

The data structure product contains sensor data acquired during the production of the product. Examples of sensors whose data might be secured that way are, for example, temperature sensors, for example, indirectly detecting the power output of a laser used in selective laser melting (SLM), electron beam used in electron beam melting (EBM) or ray to cure a binder in binder jetting, flowmeters measuring the real current applied to a component of a manufacturing device like a laser, temperature sensors detecting the temperature of the material to be fused together before, during and/or after the fusion process, optical sensors detecting the movement of a coating knife applying a new layer of material to be fused together or the quality of a distribution of a powder applied using such coating knife, or optical sensors acquiring pictures during the manufacturing process. Also it can be some sensor in a device used after a manufacturing process like an additive manufacturing process providing, for example, some data regarding the surface structure and generic form of the product. Typically, it is preferred that it is a sensor used during the manufacturing process.

According to further embodiments the sensor data preferably is acquired using a sensor unit containing a sensor and a processing unit, wherein the sensor unit is protected by a security casing enclosing the sensor and the processing unit. Typically it is preferred that the processing unit is a hardware oracle, more preferred a blockchain chip. The term "hardware oracle" as used herein refers to a device containing security elements enabling the device using software security means like cryptographic methods, mechanical security means like lockable enclosing or electronical security means like means deleting the data of the device in case of tampering. Typically, it is preferred that such hardware oracle at least contains cryptographic keys. Typically, it is preferred that the processing unit of the sensor data assembly is a block-chain chip. It was noted that despite the higher costs and requirements resulting from this the possibility to encrypt the acquired data using hardware means proved to be especially beneficial. For example, it allows to securely provide a manipulation proof data structure product being a reliable source of data to be verified or used in later review processes of a manufacturing process.

The term "processing unit" as used herein refers to data processing units as used for processing data. Herein, for example, checksums and cryptographic checksums are generated, smart contracts are executed, measured and predefined values are compared, a reaction to a specific situation a determined, an output is generated, a part of a data structure product is reconstructed, a checksum, preferably cryptographic checksum, is validated, new blocks for a blockchain are generated, new blocks are integrated in the blockchain, and so on. Such processing unit can, for example, be found in computers, clients, smart phones, and servers. For example, such processing unit can also be found in knots of the distributed database like a blockchain.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "cryptographic checksum" as used herein refers to a data checksum preferably acquired using a cryptographic hash function on the corresponding data or a part of the corresponding data. Furthermore, it can especially refer to a digital signature or a cryptographic authentication code adapted to be used to verify data used to generate the cryptographic checksum to protect against manipulation. Herein, such cryptographic checksum can, for example, be provided for each sensor data acquired or for the complete monitored data. Providing a multitude of cryptographic checksum typically provided a higher protection against manipulation. Providing such cryptographic checksum for, for example, a complete block to be included in the distributed database typically reduces the required workload for the processing unit, but decreases the data security at least slightly.

According to further embodiments the sensor data preferably contains an unique identifier of at least one sensor, more preferred of at least two sensors, even more preferred of all sensors. This seems to be especially useful in a trustless situation when common standards have to be used to ensure reliable data. It was noted that relying, for example, relying on a third party providing defined sensor units with unique identifiers allows to provide a good cooperation even in such trustless situation.

According to further embodiments the data structure product preferably contains sensor data of multiple sensors. This, for example, provides a more detailed data structure product being available for later reviews.

According to further embodiments the data structure product preferably contains an unique identifier of a manufacturing device used during the manufacturing of the product. It was noted that such provision of easy to identify manufacturing devices surprisingly greatly simplified the optimization of a production process and the location of specific errors occurring, for example, based on a wearing out of the manufacturing device.

According to further embodiments the data structure product preferably contains sensor data of the product acquired after the production of the product. Such sensor data, for example, relating to an analysis step greatly helped to predict product behavior and service intervals.

The data structure product contains data regarding the maintenance of the product. For example, such data regarding the maintenance of the product can refer to a service contract, like data regarding the durability of the product, required service times, or the fulfillment of certain requirements allowing to provide, for example, specific service agreements.

According to further embodiments the data structure product preferably contains operational data of the product. Storing such costumer information directly in the data structure product surprisingly typically provided quite some benefit despite the increased data storage required in this context. Providing such bundle containing all necessary information greatly decreased the risk of later mistakes by applying the wrong usage to the specific part. The higher the demand and requirements for the specific parts become the higher the benefit is expected to grow.

According to further embodiments the data structure product preferably contains an unique identifier of the product. Including such specific identifier greatly simplifies the correct assignment of the specific data structure product to the specific product.

According to further embodiments the data set preferably contains an unique identifier of at least one sensor, at least one manufacturing device and/or the product. Using such unique identifier of at least one, more preferred at least two of the aforementioned elements was typically especially beneficial. Including an unique identifier of the product along with an unique identifier of at least one sensor and/or at least one manufacturing device was typically preferred for many embodiments.

According to further embodiments the data structure product preferably contains a smart contract or the result of a smart contract, wherein the smart contract is adapted to verify the fulfillment of predefined requirements of the manufacturing process and/or product characteristics. For example, such product characteristics can be a predefined quality level like achieving predefined product dimension within specific tolerances. Furthermore, such requirements during the manufacturing process can be, for example, a non interrupted additive manufacturing, the usage of a required temperature while melting substrate layers during 3D-printing or the generation of homogeneous layers during 3D-printing.

Herein, such smart contract can, for example, check, whether deviations preferably are present from specific parameters. Such deviations can be compared by means of predefined simple comparisons to a predefined threshold. However, such deviations can also be evaluated using artificially intelligence analysis methods to analyze relevant parameters, correlate them to any found deviations and known deviations modes to identify cause, result and downstream effect.

The term "smart contract" as used herein especially includes data like program data or data being able to be executed by a program to perform specified steps or actions including control commands, specified values, requirements, interrelated data like measured values and corresponding action in response to fulfilling or not fulfilling predefined values in comparison to said measured values. For example, executing the smart contract can be done by a correspondingly selected distributed database or a runtime environment like a virtual machine. Preferably, such means for executing the smart contract are turing complete. Typically, it is preferred that the smart contract is executed using the infrastructure of the distributed database.

The product is a part of a streaming engine, preferably a steam turbine or a gas turbine, even more preferred a gas turbine. It appears that these parts are typical examples of products benefitting greatly from such data structure product.

The product is a heat shield, a blade or a vane. These parts represent especially stressed parts of streaming engines having high demands that can be more easily met using the inventive data structure products.

According to further embodiments the data structure product preferably is stored in database being protected against manipulation. Examples of such databases are distributed ledgers like blockchains and peer-to-peer data bank systems. The protection of the distributed database against manipulation can be realized using methods and means as available to a person skilled in the art. For example, said distributed database can be realized as blockchain to ensure that older data of the blockchain contained in earlier blocks is not manipulated by comparing the connection between older and newer blocks of the blockchain. Furthermore, the distributed database can be realized as encrypted database allowing new data to be added and old data to be retrieved only by a trusted party. Furthermore, it can be a peer-to-peer network allowing only access of a specified persons and/or a correspondingly restricted access.

According to further embodiments the data structure product preferably contains at least two, more preferred at least three, elements selected from the group consisting of data related to the product to be produced, data related to the production process, sensor data acquired during the manufacturing process, measurement data regarding the product acquired after the production process and smart contract data containing a smart contract or a result of a smart contract. In further embodiments it is preferred that the data structure product contains all of the aforementioned elements. Herein, said elements can be stored together or separately in, for example, a manipulation prove database. For example, it can be preferred to at least separate the data related to the product to be produced. This allows to, for example, separate costumer information being the topic of increased security from remaining information. This can be especially beneficial, as such costumer ordering a specific products already has this typically highly confidential information, while the data to verify a correct execution of the requirements can be transmitted and reviewed allowing the verification while itself might not be problematic even if lost. In further embodiments it is preferred to provide a data structure product adapted to perform a verification of a correct execution of the production process, wherein the data structure product is set up to lack information preventing to produce the product based only on the data structure product. For example, it can contain an identification number to allow an association with laid down production data stored at the costumer ordering the product to fill in the missing information and, for example, execute smart contracts verifying the correct production of the product. Such product data can be included in the manipulation protected data base. This, for example, allows reducing the access to the production data to a single request from the manufacturer, while later data structure products used to verify the correct production of the part excludes essential information rendering the theft of corresponding data ineffective.

According to further embodiments the data structure product preferably contains at least two elements selected from the group consisting of data related to the product to be produced, data related to the production process, sensor data acquired during the manufacturing process, measurement data regarding the product acquired after the production process and smart contract data containing a smart contract or a result of a smart contract.

According to further embodiments at least one cryptographic checksum of at least one element, more preferred at least two elements, even more preferred at least three elements, preferably are created and stored in the database. Typically, it is especially preferred that the database is a distributed database.

The term "distributed database" as used herein refers to a decentralized database like a blockchain, a distributed ledger, a distributed data storage system, a distributed ledger technology based system, a manipulation proof database, a cloud, a cloud service, a blockchain in a cloud or a peer-to-peer database. Herein, such distributed database can be a public database like a public blockchain or a non public database like a private blockchain. Typically, it is preferred that such blockchain is non public and can only be accessed by authorized persons. Herein, such access right might also be granted for external persons to allow a review of for example the production data of specific products.

According to further embodiments the sensor data and the cryptographic checksum preferably are stored in the distributed database as blocks, wherein the blocks are interconnected, preferably using a cryptographic hash function. This allows to further increase the data security, even if the blocks are, for example, stored on servers possibly being a point of cyberattacks and tries to manipulate the data. Typically, it is preferred that such blocks are part of a block-chain.

According to further embodiments such distributed database preferably provides a further encryption dividing the data contained therein into subsections. This allows to provide access to specific data for specific persons. It was noted that such method is very beneficial, for example, in case a costumer is granted the right to review the production data of a specific product, while the data regarding other products contained in the distributed database is to be kept secret. Alternatively or additionally the distributed database can be split into at least two sub databases, wherein these sub databases are split up according to, for example, different costumers, an official part and an unofficial part, or the like. For example, such official part can contain the sensor data of different layers of a product produced using additive manufacturing and the construction data of said product. While the inofficial part may contain the specific working conditions of an additive manufacturing device based on the construction data provided by a costumer and the internal know how to realize such structure.

The term "data block" as used herein refers to a block of a distributed database like a blockchain or a peer-to-peer database. It may contain data regarding the size of the data block, a block header, a counter of monitored data, sensor data and/or monitored data. Said block header can, for example, contain a version number, a checksum, or a time stamp. According to further embodiments the database preferably is a blockchain, and wherein the data structure product is stored in at least one block of the blockchain.

According to further embodiments the data structure product preferably contains manufacturing data and, wherein the data structure product is stored in the database, more preferred a distributed database.

According to further embodiments the database preferably contains instruction data regarding the manufacturing of the product. Such instruction data can be, for example, CAD files of the product to be manufactured, information regarding the material to be used during the manufacturing process and/or manufacturing conditions like the temperature resulting from a laser melting a metal powder layer during selective laser melting.

According to further embodiments the data structure product preferably is part of a digital twin or is a digital twin of the product. Using the data structure product in this context to provide the required information to simulate the use and behavior of the product greatly increases the benefit acquired herewith. Also adapting the data structure product accordingly to be used in this way renders its integration possible into new systems that are deemed to be keypoints of Industry 4.0.

The data structure product is adapted to monitor the later use of the product. For example, it can monitor the usage of the product to detect violations of the service interval or the exceeding of the operational conditions. Herein, it becomes possible to provide a highly accustomed data structure product for the specific product. It can include, for example, the specific production conditions and slight deviations noted in this context.

Taking into account sensor data acquired during the production or measurement data acquired after the production it can adapt the service time according to the very specific later use and greatly increase the overall security during usage. Also it can automatically trigger a notification or even a turn off of a device containing said product, if specific requirements are met and, for example, the security of the device cannot be ensured because of deviations from the specified usage conditions.

According to further embodiments the database preferably contains a control mechanism adapted to control a processing and/or storing mechanism of incoming data structure products according to a specified order, wherein the data structure product contains a priority data, wherein said priority data is adapted to influence the control mechanism. This, for example, can be used to prioritize the processing of data contained within the data structure product like monitored data by the distributed database. For example, if monitored data with high priority should be stored in the distributed database system, the difficulty of a cryptographic puzzle is adapted to speed up the validation and storing process. This, for example, can be beneficial in cases where the sensor data indicate an event (e.g., a malfunction of a/the manufacturing device) which needs preferably taken care of as fast as possible. Additionally or alternatively the distributed database system adjusts the transmission speed of the monitored data within the network of nodes of the distributed database system based on the priority. This, for example, can be beneficial in cases where the monitored data needs to be rapidly transmitted to a specific node of the distributed database system. The specific node is, for example, a specific processing node for high priority sensor data/monitored data which is capable to shut down the manufacturing device and/or manufacturing process to avoid damage of the manufactured product or the manufacturing device/system.

According to another aspect the present invention preferably refers to a kit containing a product and an inventive data structure product of the product. Such kit provides a great improvement for the user of the product and allows to, for example, retrieve specific data with regard to the specific product which can be centrally updated by the manufacturer of the product. Herein, data containing the latest operating parameters or maintenance parameters can be directly retrieved and trigger updates or actions at the machine containing such product resulting in a greatly reduced risk of failure and damages resulting from using incorrect or outdated data.

According to further embodiments the data structure product preferably is stored in a database, more preferred a distributed database, and wherein the product and the data structure product are connected by an unique identifier of the product. This, for example, allows to easily retrieve the corresponding data structure product in a secure fashion.

According to further embodiments the data structure product preferably is stored on a transport medium. Examples of such transport medium are mobile hard drive, USB stick, CD or DVD, the like or combinations thereof. This allows an easily update all relevant data and trigger relevant actions even in isolated systems.

According to another aspect the present invention preferably refers to a manufacturing device, wherein the manufacturing device is adapted to manufacture a product, and wherein the manufacturing device is adapted to provide at least a part of the inventive data structure product.

According to further embodiments the manufacturing device preferably contains at least one sensor unit, more preferred at least two sensor units, wherein the sensor unit contains a sensor and a processing unit, wherein the sensor unit is protected by a security casing enclosing the sensor and the processing unit.

According to further embodiments the manufacturing device preferably contains at least two sensors, more preferred at least three sensors, wherein manufacturing device is adapted to provide sensor data of the sensor data of the at least two sensors, more preferred at least three sensors, to the data structure product. Typically, it is preferred that said sensors are different sensors like selected from the group consisting of optical temperature sensors, non-optical temperature sensors, sensors monitoring the current applied to a laser used in selective laser melting or an electron beam, cameras, sensors measuring the powder flow in the powder flow device, and weight sensors monitoring the weight of the powder bed. This allows to bundle multiple data in the secured data structure product allowing a more detailed review.

According to further embodiments the manufacturing device preferably contains at least one data storage, wherein the data storage is adapted to at least temporarily store the manufacturing data of the data structure product. Preferably, such data storage is protected against manipulation. For example, this allows to only temporarily connect to a database or some network to batchwise transfer the collected data. Also this increases the safety, as the acquired data can be stored even in case of problems of the connection.

The term "data storage" or comparable terms as used herein, for example, refer to a temporary data storage like RAM (Random Access Memory) or long term data storage like hard drives or data storage units like CDs, DVDs, USB sticks and the like.

According to further embodiments the manufacturing device preferably contains a processing unit collecting and/or processing at least a part of the manufacturing data to be included in an inventive data structure product.

According to further embodiments the manufacturing device preferably is a device utilizing selective laser melting, electron beam melting or binder jetting, more preferred selective laser melting or electron beam melting. These manufacturing devices typically benefit greatly from the use of product specific data structure products to increase, for example, the overall efficiency and security.

According to further embodiments the manufacturing device preferably contains an encryption device hardware, preferably a block chain chip, adapted to create the cryptographic checksum. Directly including such specialized hardware, for example, further increases the security and reliability.

According to another aspect the present invention preferably refers to a method of manufacturing a product, wherein the method utilizes a manufacturing process to manufacture the product, wherein the manufacturing process is an additive manufacturing process, wherein data is collected during the manufacturing process, wherein the data is stored in a data structure product referring to the specific product, wherein the data structure product is protected against manipulation.

According to further embodiments further data preferably is collected during a post processing step and/or during an analysis step after the manufacturing process, and wherein the further data is stored in the data structure product. For example, such analysis step after the manufacturing process can be a measurement using optical sensors to detect, for example, the dimensions of the product or the exact location of parts of the product like film cooling holes of a blade or vane. For example, such post processing step can include some coating applied to the product. Such coatings are applied, for example, to parts of a streaming engine like heat shields, blades and vanes to provide a thermal barrier coating.

According to another aspect the present invention refers to a computer program product containing an inventive data structure product or with program commands to perform an inventive method.

According to another aspect the present invention refers to a device for providing an inventive computer program product, wherein the device stores the data structure product or the computer program product and/or provides the data structure product or the computer program product for further use.

Figure 1 shows a schematic drawing of an example of the inventive data structure product 1 and its application.

Herein, a manufacturing device 11 utilizing selective laser melting to manufacture a product 4 being a blade of a streaming engine of a streaming engine. Herein, the laser 5 produces a beam 6 being directed by a mirror 7 onto the powder bed. The manufacturing of the product 4 is monitored by a sensor 10 being connected to a processing unit 9 by a first connection 8. The first connection 8 is secured using a security casing enclosing the sensor 10, the first connection 8 and the processing unit 9. Said processing unit 9 provides a cryptographic checksum of the sensor data to be included in the data structure product 1. The sensor data, its cryptographic checksum, an unique identifier of the sensor 10 and an unique identifier of the manufacturing device 11 are transferred through an interface to the data structure product 1. Herein, said interface contains a data storage 14 to at least temporarily store the collected data.

Said data storage 14 of the manufacturing device 11 also contains a smart contract and is adapted to execute them. Said smart contract is provided by the data structure product 1 and specifies certain requirements during the manufacturing process to even cancel the manufacturing process if the sensor 10 detects unacceptable conditions. The collected data during the manufacturing process are forwarded to the data structure product 1 to be at least partially stored therein. A further smart contract in the data structure product 1 reviews the incoming collected data and reduces this data as required to limit the data to possibly relevant data for later use.

After the manufacturing process the product 4 is transferred in a processing device 12. Within the processing device 12 a thermal barrier coating is applied onto the surface of the product 4. Herein, the specification of the thermal barrier coating is retrieved from the data structure product 1. Simultaneously the collected data during the processing step is stored in the data structure product 1 again.

Hereafter, the product 4 is transferred into a measurement device. Herein, the product 4 is analyzed providing, for example, the data regarding its surface. Said data is also included in the data structure product 1. Said measurement device is configured to compare the acquired data to theoretical data to be expected as provided by the data structure provided. This allows spotting corresponding problems immediately like damages during the handling or mix-ups of different product units. The collected data of the measurement device are again sent to the data structure product 1 to be at least partially stored therein.

In the example as shown in figure 1 the instruction data 2 containing information with regard to the manufacturing of the product 4 is additionally included in the data structure product 1. Said data can be used to specific conditions of the manufacturing process or during the processing in the processing device. Also it can contain details to be reviewed in the measurement device.

Furthermore, the data structure product 1 contains operational data and maintenance data regarding the later use of the product 4 in a machine 13 utilizing the product 4.

During the procedure as shown in figure 1 the data structure product 1 can be stored in the distributed database 3 being protected against manipulation and directly accessed there. However, it can also be retrieved from the distributed database 3 at least temporarily to establish a working copy on a local data storage. Later such working copy being able to function disconnected from the distributed database 3 is again uploaded to said database. Herein, said transmitted data structure product 1 is reviewed with regard to its integrity and in case a possible manipulation is detected can be isolated and a signal for further review can be triggered. The user of the finished product 4 can later retrieve the data structure product 1 either complete or in a modified form from the distributed database 3 as part of a kit consisting of the product 4 unit and its data structure product 1.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Device for providing a computer program product, wherein the device stores the computer program product and provides the computer program product for further use,
wherein the computer program product contains a data structure product (1) referring to a product (4) and a manufacturing process of the product (4),
wherein the manufacturing process is an additive manufacturing process,
wherein the data structure product (1) contains manufacturing data of the manufacturing process of the specific product (4),
wherein the data structure product contains monitored data acquired during the production of the product (4),
wherein the monitored data contains sensor data acquired during the production of the product (4),
wherein the data structure product (1) is protected against manipulation,
wherein the data structure product (1) contains data regarding the maintenance of the product (4) including the required service time,
wherein the data structure product is adapted to monitor a later use of the product (4) and adapt the service time according to the very specific use by taking into account the sensor data acquired during the production,
wherein the product (4) is a heat shield, a blade or a vane used in a streaming engine.

2. Device according to claim 1, wherein manufacturing process is a 3D-printing manufacturing process like selective laser melting, electron beam melting or binder jetting.

3. Device according to any of claims 1 to 2, wherein the data structure product (1) contains an unique identifier of at least one sensor (10), at least one manufacturing device (11) and/or the product (4).

4. Device according to any of claims 1 to 3, wherein the data structure product (1) contains operational data of the product (4).

5. Kit containing a product (4) and a device for providing a computer program product according to any of claims 1 to 4 of the product (4).

## Patentansprüche

1. Vorrichtung zur Bereitstellung eines Computerprogrammprodukts, wobei die Vorrichtung das Computerprogrammprodukt speichert und das Computerprogrammprodukt für eine weitere Verwendung bereitstellt,
wobei das Computerprogrammprodukt ein Datenstrukturprodukt (1) enthält, das sich auf ein Produkt (4) und einen Herstellungsprozess des Produkts (4) bezieht,
wobei der Herstellungsprozess ein additiver Herstellungsprozess ist,
wobei das Datenstrukturprodukt (1) Herstellungsdaten des Herstellungsprozesses des spezifischen Produkts (4) enthält, wobei das Datenstrukturprodukt überwachte Daten enthält, die während der Produktion des Produkts (4) erfasst werden,
wobei die überwachten Daten Sensordaten enthalten, die während der Produktion des Produkts (4) erfasst werden,
wobei das Datenstrukturprodukt (1) gegen Manipulation geschützt ist,
wobei das Datenstrukturprodukt (1) Daten über die Wartung des Produkts (4) einschließlich der erforderlichen Servicezeit enthält,
wobei das Datenstrukturprodukt dazu angepasst ist, eine spätere Verwendung des Produkts (4) zu überwachen und die Servicezeit gemäß der sehr spezifischen Nutzung unter Berücksichtigung der während der Produktion erfassten Sensordaten anzupassen,
wobei das Produkt (4) ein Hitzeschild, eine Schaufel oder eine Laufschaufel ist, die in einem Strömungsmotor verwendet wird.

2. Vorrichtung nach Anspruch 1, wobei der Herstellungsprozess ein 3D-Druckverfahren wie selektives Laserschmelzen, Elektronenstrahlschmelzen oder Binderstrahlen ist.

3. Vorrichtung nach einem der Ansprüche 1 bis 2, wobei das Datenstrukturprodukt (1) eine eindeutige Kennung mindestens eines Sensors (10), mindestens einer Herstellungsvorrichtung (11) und/oder des Produkts (4) enthält.

4. Vorrichtung nach einem der Ansprüche 1 bis 3, wobei das Datenstrukturprodukt (1) Betriebsdaten des Produkts (4) enthält.

5. Kit, das ein Produkt (4) und eine Vorrichtung zum Bereitstellen eines Computerprogrammprodukts nach einem der Ansprüche 1 bis 4 des Produkts (4) enthält.

## Revendications

1. Dispositif pour disposer d'un produit de programme d'ordinateur, dans lequel le dispositif met en mémoire le produit de programme d'ordinateur et met le produit de programme d'ordinateur à disposition pour un autre usage,
dans lequel le produit de programme d'ordinateur contient un produit (1) de structure de données se référant à un produit (4) et à une opération de fabrication du produit (4),
dans lequel l'opération de fabrication est une opération de fabrication additive,
dans lequel le produit (1) de structure de données contient une donnée de fabrication de l'opération de fabrication du produit (4) précis,
dans lequel le produit de structure de données contient une donnée contrôlée acquise pendant la production du produit (4), dans lequel la donnée contrôlée contient une donnée de capteur acquise pendant la production du produit (4),
dans lequel le produit (1) de structure de données est protégé vis-à-vis d'une manipulation,
dans lequel le produit (1) de structure de données contient une donnée concernant l'entretien du produit (4) y compris le temps d'entretien requis,
dans lequel le produit de structure de données est propre à contrôler une utilisation ultérieure du produit (4) et à adapter le temps d'entretien suivant l'utilisation très précise en prenant en compte la donnée de capteur acquise pendant la production,
dans lequel le produit (4) est un bouclier thermique, une aube mobile ou une aube fixe utilisée dans une turbomachine.

2. Dispositif suivant la revendication 1, dans lequel l'opération de fabrication est une opération de fabrication d'impression en 3D, comme une fusion laser sélective, une fusion par faisceau d'électrons ou une projection de liant.

3. Dispositif suivant l'une quelconque des revendications 1 à 2, dans lequel le produit (1) de structure de données contient un identifiant unique d'au moins un capteur (10), d'au moins un dispositif (11) de fabrication et/ou du produit (4).

4. Dispositif suivant l'une quelconque des revendications 1 à 3, dans lequel le produit (1) de structure de données contient une donnée opérationnelle du produit (4).

5. Trousse contenant un produit (4) et un dispositif pour disposer d'un produit de programme d'ordinateur suivant l'une quelconque des revendications 1 à 4 du produit (4).
